# EUROPÄISCHE PATENTANMELDUNG

(11) **EP 4 012 234 A1**
(43) Veröffentlichungstag der Anmeldung: **15.06.2022**
(21) Anmeldenummer: 21203755.0
(22) Anmeldetag: 20.10.2021
(51) Int. Cl.: F16J 15/18

(54) **ABROLLDICHTRING, DYNAMISCHE DICHTANORDNUNG, HUBKOLBENPUMPE UND VERWENDUNG DES ABROLLDICHTRINGS**

(30) Priorität: 10.12.2020 DE 102020133003
(71) Anmelder: IEG - Industrie-Engineering Gesellschaft mit beschränkter Haftung, 72770 Reutlingen (DE)
(72) Erfinder: Bernhardt, Bruno, 72766 Reutlingen (DE); Prof. Dr. Stamm, Jürgen, 01187 Dresden (DE); Dr. Sick, Marc, 70563 Stuttgart (DE)
(74) Vertreter: mepat Patentanwälte

(57) **Zusammenfassung**

Die vorliegende Erfindung stellt einen Abrolldichtring (1) zur translatorischen Abdichtung eines dynamischen Dichtsystems aus zwei linear zueinander bewegten Dichtelementen (11, 12) bereit, wobei der Abrolldichtring (1) aus einer Rundschnur (100) mit zwei Stoßenden (101, 102) gefertigt ist, die durch Ringschluss miteinander verbunden sind, wobei ein Material des Abrolldichtrings (1) an seinem Außenumfang (A₀) gestreckt und an seinem Innenumfang (I₀) gestaucht vorliegt. Ferner offenbart die Erfindung eine dynamische Dichtanordnung (10) aus zwei linear zueinander bewegten Dichtelementen (11, 12) und dem Abrolldichtring (1), sowie eine Hubkolbenpumpe (20) und eine Verwendung eines Abrolldichtrings (1) in einer dynamischen Dichtanordnung (10).

## Beschreibung

Die Erfindung betrifft einen Abrolldichtring zur translatorischen Abdichtung eines dynamischen Dichtsystems aus zwei linear zueinander bewegten Dichtelementen, sowie eine dynamische Dichtanordnung aus zwei linear zueinander bewegten Dichtelementen, eine Hubkolbenpumpe und eine Verwendung des Abrolldichtrings.

Aus dem Stand der Technik ist bekannt, dass die Abdichtung von Druck- und Saugräumen eines in einem Pumpenzylinder linear geführten Kolbens bislang über Gleitflächen oder Gleitdichtungen in gehärteten oder elastischen Ausführungen erfolgt, was besonders glatte und maßhaltige Gleitflächen erfordert. Der Reibungswiderstand zwischen 10 und 50 % bedingt allerdings auch hier großen Verschleiß mit geringer Lebensdauer der Dichtringe und Dichtflächen. Gerade für schwer zugängliche Pumpen wie z. B. eine Grundwasser-Kreislaufpumpe in Wärmepumpen-Kreisläufen für Druckbereiche von 1 - 2 bar mit ca. 10 m³/h im mehrjährigen 24-Stundenbetrieb wäre eine annähernd verschleißlose Dichtung zwischen den bewegten Dichtungsflächen wünschenswert.

Rollringdichtungen, die herkömmlicherweise zum Rohranschluss an Muffen verwendet werden, wie in DE 200 13 563 U1 beschrieben, sind zur Abdichtung derartiger dynamischer Dichtsysteme, bei denen die Dichtelemente eine linear gleitende Bewegung zueinander ausführen, nicht geeignet, da sie beim Abrollen eine übermäßige Stauchung und Streckung erfahren und durch die dauerhafte Wechselbeanspruchung zu schnell verschleißen. Dazu müssen die Muffen stets mit zwei Rollringen ausgestattet werden.

Ausgehend von diesem Stand der Technik ist es Aufgabe der vorliegenden Erfindung, einen Abrolldichtring zur translatorischen Abdichtung eines dynamischen Dichtsystems aus zwei linear zueinander bewegten Dichtelementen wie beispielsweise eines linear in einem Pumpenzylinder geführten Pumpenkolbens bereitzustellen.

Diese Aufgabe wird durch einen Abrolldichtring mit den Merkmalen des Anspruchs 1 gelöst.

Die weitere Aufgabe, eine Dichtanordnung aus zwei linear zueinander bewegten Dichtelementen mit einer verschleißarmen Dichtung bereitzustellen, wird durch die dynamische Dichtanordnung mit den Merkmalen des unabhängigen Anspruchs 4 gelöst.

Weiterbildungen des Abrolldichtrings und der dynamischen Dichtanordnung sind in den jeweiligen Unteransprüchen ausgeführt.

Eine Hubkolbenpumpe mit einer derartig verbesserten Dichtanordnung und eine vorteilhafte Verwendung einer Abrolldichtung in einer Dichtanordnung werden durch die Hubkolbenpumpe mit den Merkmalen des Anspruchs 8 und die Verwendung mit den Merkmalen des Anspruchs 9 beschrieben.

Gemäß einer ersten Ausführungsform eines erfindungsgemäßen Abrolldichtrings, der zur translatorischen Abdichtung eines dynamischen Dichtsystems aus zwei linear zueinander bewegten Dichtelementen vorgesehen ist, ist der Abrolldichtring aus einer Rundschnur mit zwei Stoßenden gefertigt, indem die Stoßenden der Rundschnur durch Ringschluss miteinander verbunden werden. Nach dem Ringschluss liegt das Rundschnur-Material am Außenumfang des Abrolldichtrings gestreckt und am Innenumfang gestaucht vor.

D. h., dass der erfindungsgemäße Abrolldichtring nach seiner Herstellung im Ursprungs- oder Ruhezustand (bzw. Ausgangskonfiguration) außenumfänglich eine Streckung und innenumfänglich eine Stauchung und damit entsprechende Spannungen im Material aufweist, während ein herkömmlicher, durch Pressformen hergestellter O-Ring spannungsfrei gefertigt ist. Bei Verwendung eines solchen herkömmlichen O-Rings als Abrolldichtring treten beim Abrollvorgang, bei dem der ursprüngliche Innenumfang zum Außenumfang wird und umgekehrt, durch die dann erzeugten Streckungen und Stauchungen Spannungen im Material auf, die deutlich über den maximal zulässigen 6 % liegen, die für O-Ringe im Dichteinsatz als zulässig erachtet werden, damit die Dichtfunktion über eine akzeptable Lebensdauer hinweg gewährleistet ist. Denn ein durch Pressformen hergestellter O-Ring erfordert und bewirkt einen intermittierenden erhöhten Reibungsdruck bei jedem Abrolldichtungszyklus. Bei geringen Dichtungsdrücken unter 2 bar kann dieser erhöhte Reibungsdruck nicht dem Dichtungsdruck angepasst werden. Ist der O-Ring auf geringen Dichtungsdruck unter 2 bar eingestellt, muss der erforderliche konstante Reibungsdruck für die Abrolldichtung mehrfach erhöht werden. Das führt bei herkömmlichen O-Dichtringen unter 6 mm Schnurstärke zu erhöhten Gleiterscheinungen und erniedrigt die erforderliche Lebensdauer einer im Dauerbetrieb eingesetzten Pumpenabdichtung.

Ein solcher erhöhter Reibungsdruck ist beim Einsatz eines erfindungsgemäßen aus einer Rundschnur hergestellten Abrolldichtrings nicht erforderlich.

Denn im Gegensatz zu einem herkömmlich durch Pressformen ohne Spannungen hergestellten O-Rings heben sich die bei der Herstellung des erfindungsgemäßen Abrolldichtrings erzeugten Spannungen, die durch geeignete Wahl des Materials sowie der Schnurstärke im Verhältnis zum Ringdurchmesser die für eine Dehnung bzw. Stauchung zulässigen 6 % nicht überschreiten, nach einer halben Umdrehung (d. h. Abrollen um 180° in Bezug auf die Schnurdicke bzw. Schnurstärke) auf. D. h., dass die Stauchung am ursprünglichen Innenumfang, der an dem quasi umgestülpten Abrolldichtring nun den Außenumfang bildet, aufgehoben ist. Entsprechend ist die Streckung bzw. Dehnung am ursprünglichen Außenumfang nach Abrollen um eine halbe Umdrehung aufgehoben, wenn der ursprüngliche Außenumfang den Innenumfang bildet. Beim weiteren Abrollen nimmt der Abrolldichtring nach erfolgter ganzer Umdrehung seinen Ursprungszustand wieder ein, in dem die Streckung und Stauchung die maximal zulässigen 6 % nicht überschreiten, so dass der erfindungsgemäße Abrolldichtring zu keinem Zeitpunkt eine höhere Streckung/Stauchung als im Ursprungszustand aufweist.

In einer bevorzugten Ausführungsform sind die Stoßenden der Rundschnur nicht durch Stoffschluss, z. B. Vulkanisation oder Kleben, verbunden, wodurch die Stoßstelle einen Verlust an Elastizität und/oder Verformbarkeit erleidet, sondern durch Formschluss. Vulkanisation zerstört die erforderliche Elastizität, die durch entsprechende korrespondierende Klebeverbindungen bisher nicht ersetzt werden konnte. Durch die Zerstörung der Schwefelverbindungen wird der Vulkanisationsbereich wieder zum Kautschuk. Zum Formschluss weisen die Stoßenden korrespondierende Formschlusselemente auf, die ineinander gefügt werden können, um die Stoßenden formschlüssig zu verbinden.

Geeigneter Weise können die Formschlusselemente einfach aus einem Hohlkegel und einem korrespondierenden Vollkegel bestehen, die ineinander gefügt durch den radialen Dichtungsdruck einen stetigen axialen Dichtungsdruck auf der Dichtungskegelfläche erfahren, der sich auch nicht mehr lösen oder verändern kann, solange der radiale Dichtungsdruck besteht. Gegebenenfalls können die Formschlusselemente aber auch einen Hintergriff bereitstellen, damit die Verbindung der Stoßenden auch gegen Zug gesichert ist.

Vorzugsweise kann das Material der Rundschnur und damit des Abrolldichtrings ein gummielastisches Material mit einer Shore-Härte in einem Bereich von 50 bis 90 Shore sein, um eine Dichtwirkung und genügend Reibung an den Dichtelementen für ein schlupffreies und scherungsarmes Abrollen zu erzielen.

Ein weiterer Gegenstand der Erfindung betrifft eine dynamische Dichtanordnung aus zwei linear zueinander bewegten Dichtelementen, die ein zylindrisches Dichtelement mit einer Außenumfangsfläche und ein hohlzylindrisches Dichtelement mit einer Innenumfangsfläche sind. Das zylindrische Dichtelement ist in Bezug auf eine Längsachse relativ beweglich in dem hohlzylindrischen Dichtelement angeordnet ist, wobei eine dynamische Dichtung zwischen der Innenumfangsfläche und der Außenumfangsfläche angeordnet ist. Erfindungsgemäß ist die dynamische Dichtung ein erfindungsgemäßer Abrolldichtring, der durch seine Fertigung aus Rundschnur im Ruhezustand der Ausgangskonfiguration am Außenumfang eine Streckung und am Innenumfang eine Stauchung von maximal 6 % aufweist. Dies gilt auch für die Dichtanordnung, in der der Abrolldichtring abdichtend unter Reibungsdruck zwischen den Dichtelementen eingespannt ist, sodass der Abrolldichtring eine gewisse, geringe Verformung an den jeweiligen Kontaktflächen mit der Außenumfangsfläche und der Innenumfangsfläche erfährt. Dadurch weist der Abrolldichtring beim Abrollen zwischen der Innenumfangsfläche und der Außenumfangsfläche der zwei linear zueinander bewegten Dichtelemente entlang einer Dichtstrecke eine Streckung und Stauchung von höchstens 6 % auf, die in der Ausgangskonfiguration vorliegen, überschreitet diese aber nicht, da die Materialstreckung und -spannung im Abrollring während des Abrollens aufgehoben werden, wenn der Abrollring in der umgestülpten Umkehrkonfiguration vorliegt.

In einer weiteren Ausführungsform der erfindungsgemäßen dynamischen Dichtanordnung ist vorgesehen, dass die Dichtstrecke zumindest einseitig durch einen Ringanschlag begrenzt wird, der an dem zylindrischen Dichtelement oder dem hohlzylindrischen Dichtelement vorliegt und sich entsprechend von der Außenumfangsfläche radial nach außen oder von der Innenumfangsfläche radial nach innen erstreckt. Ist die Dichtstrecke beidseitig durch einen Ringanschlag begrenzt, so können beide Ringanschläge entweder an dem zylindrischen Dichtelement vorliegen und sich von der Außenumfangsfläche radial nach außen erstrecken oder an dem hohlzylindrischen Dichtelement vorliegen und sich von der Innenumfangsfläche radial nach innen erstrecken. Es kann aber auch vorgesehen sein, dass die Dichtstrecke an einem Ende durch einen sich von der Außenumfangsfläche des zylindrischen Dichtelements radial nach außen erstreckenden Ringanschlag und an dem anderen Ende durch einen sich von der Innenumfangsfläche des hohlzylindrischen Dichtelements radial nach innen erstreckenden Ringanschlag begrenzt wird.

Die für ein schlupffreies und scherungsarmes Abrollen erforderliche Reibung zwischen dem Abrolldichtring und den Dichtelementen ermöglicht es, dass die Dichtflächen an der Außenumfangsfläche und der Innenumfangsfläche mit Rauigkeiten oder Schmutzteilchen belegt sein können, sodass anders als bei den bisher eingesetzten Gleitdichtungen vorteilhaft die Dichtelemente nicht mit besonderes glatten und maßhaltigen Gleitflächen gefertigt werden müssen, solange die Rauigkeiten kleiner als die jeweilige Kontaktfläche des Abrolldichtrings mit der Außenumfangsfläche und der Innenumfangsfläche sind.

Sollte die Reibung zwischen dem Abrolldichtring und der Außenumfangsfläche und der Innenumfangsfläche der Dichtelemente nicht für ein schlupffreies und scherungsarmes Abrollen ausreichen, können in noch einer weiteren Ausführungsform der erfindungsgemäßen dynamischen Dichtanordnung die Oberfläche des Abrolldichtrings und/oder die Außenumfangsfläche und/oder die Innenumfangsfläche eine reibungsverstärkende Beschichtung aufweisen. Mit einer reibungsverstärkenden Beschichtung werden die Rauigkeiten an der jeweiligen beschichteten Oberfläche erhöht. Daher wird vorliegend unter einer reibungsverstärkenden Beschichtung auch eine Aufrauhung der Oberfläche verstanden. Alternativ dazu kann eine reibungsverstärkende Beschichtung durch das Aufbringen eines reibungsverstärkenden Mittels erzeugt werden, das Partikel in einem Bindemittel enthält. Die Partikel, vorzugsweise mit Durchmesser im µm-Bereich, können anorganische (z. B. keramische) oder metallische Partikel sein, das Bindemittel kann beispielsweise ein wärme- oder lufthärtendes Bindemittel sein.

Die zwei linear zueinander bewegten Dichtelemente einer erfindungsgemäßen dynamischen Dichtanordnung können in einer bevorzugten Ausführungsform ein Pumpenkolben und Pumpenzylinder einer Pumpe sein, wobei das zylindrische Dichtelement mit der Außenumfangsfläche durch den Pumpenkolben und das hohlzylindrische Dichtelement mit der Innenumfangsfläche durch den Pumpenzylinder bereitgestellt werden.

Damit ist auch eine Hubkolbenpumpe, die insbesondere zum Einsatz in einem Filterbrunnen vorgesehen sein kann (dann Filterbrunnenpumpe genannt), Gegenstand der Erfindung, die eine erfindungsgemäße Dichtanordnung zur Abdichtung zwischen Pumpenkolben und Pumpenzylinder aufweist.

Bei einer erfindungsgemäßen Verwendung eines erfindungsgemäßen Abrolldichtrings in einer erfindungsgemäßen dynamischen Dichtanordnung geht der Abrolldichtring beim Abrollen entlang einer Dichtstrecke aus seiner Ausgangskonfiguration nach einer halben Umdrehung in Bezug auf eine Schnurstärke des Abrolldichtrings in eine Umkehrkonfiguration über. Beim weiteren Abrollen um eine weitere halbe Umdrehung, sodass insgesamt eine ganze Umdrehung in Bezug auf die Schnurstärke erfolgt ist, nimmt der Abrolldichtring wieder seine Ausgangskonfiguration ein. In der Ausgangskonfiguration liegt das Material des Abrolldichtrings an seinem ursprünglichen Außenumfang gestreckt und an seinem ursprünglichen Innenumfang gestaucht vor, wobei der Abrolldichtung an seinem Innenumfang die Außenumfangsfläche des zylindrischen Dichtelements und an seinem Außenumfang die Innenumfangsfläche des hohlzylindrischen Dichtelements kontaktiert. In der Umkehrkonfiguration - in der der Abrollring quasi umgestülpt vorliegt, kontaktiert der ursprüngliche Innenumfang unter Aufhebung der Stauchung als Außenumfang des umgestülpten Abrolldichtrings die Innenumfangsfläche. Entsprechend kontaktiert der ursprüngliche Außenumfang unter Aufhebung der Streckung nun als Innenumfang des umgestülpten Abrolldichtrings die Außenumfangsfläche. Wie viele Umdrehungen der Abrolldichtring entlang der Dichtstrecke durchführt, hängt selbstverständlich von der Länge der Dichtstrecke und der Schnurstärke ab.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine schematische Draufsicht auf a) eine gestreckte, spannungsfreie Rundschnur mit Formschlusselementen an den Stoßenden, b) die Rundschnur im gebogenen Zustand vor Ringschluss mit Andeutung der Streck- und Stauchzonen, und c) einen Abrolldichtring nach einer erfindungsgemäßen Ausführungsform,
- **Fig. 2**: eine Teilseitenschnittansicht einer dynamischen Dichtanordnung nach einer erfindungsgemäßen Ausführungsform mit dem Abrolldichtring a) in Ausgangskonfiguration am ersten Ende der Dichtstrecke und b) in Umkehrkonfiguration am zweiten Ende der Dichtstrecke,
- **Fig. 3**: eine Teilseitenschnittansicht einer dynamischen Dichtanordnung nach einer weiteren erfindungsgemäßen Ausführungsform mit Ringanschlägen zur Begrenzung der Dichtstrecke mit dem Abrolldichtring a) in Ausgangskonfiguration am ersten Ende der Dichtstrecke und b) in Umkehrkonfiguration am zweiten Ende der Dichtstrecke,
- **Fig. 4**: eine Seitenschnittansicht durch einen Filterbrunnen mit einer Filterbrunnenpumpe, die erfindungsgemäße dynamische Dichtanordnungen aufweist.

Der Erfindung bezieht sich auf einen Abrolldichtring, der insbesondere dazu geeignet ist, Druck- und Saugräume eines linear in einem Fluid-Pumpenzylinder geführten Pumpenkolbens mit geringsten Reibungs- und Antriebsleistungen abzudichten. Durch Verzicht auf Gleitdichtungen können die Dichtflächen mit Rauigkeiten oder Schmutzteilchen belegt sein, die kleiner als die Kontaktfläche des abrollenden Abrolldichtrings sind, sodass kein Erfordernis nach besonders glatten, maßhaltigen Oberflächen besteht. Um ein Abrollen des Abrolldichtrings sicherzustellen, kann sogar die Rauigkeit auf den Dichtflächen zur Verstärkung der Reibung zwischen den Dichtelementen und dem Abrolldichtring erhöht werden. Insbesondere können auch Pumpen mit großen Durchmessern über einem Meter mit einer erfindungsgemäßen Abrolldichtung abgedichtet werden.

Erfindungsgemäß kann der zwischen zwei linear zueinander bewegten Dichtelementen, d. h. zwischen der jeweiligen Innen- und Außenumfangsfläche, eingespannte Abrolldichtring dichtend abrollen, wobei der ursprüngliche Innenumfang des Abrolldichtrings nach einer halben Umdrehung zum Außenumfang und entsprechend der ursprüngliche Außenumfang nach einer halben Umdrehung zum Innenumfang wird. Die Stauchung und Streckung überschreiten dabei nicht die zulässigen 6 %, da der erfindungsgemäße Abrolldichtring aus einer Rundschnur geformt wird, wobei er bereits eine Streckung am Außenumfang und eine Stauchung am Innenumfang erfährt, die beim Abrollen aufgehoben werden.

Im Gegensatz dazu wird ein herkömmlicher in Pressform hergestellter O-Ring ohne Spannungen am Innen- und Außenumfang gefertigt, sodass er bei der Abrollung eine Streckung und Stauchung erfährt, wenn der ursprüngliche Innenumfang zum Außenumfang und der ursprüngliche Außenumfang zum Innenumfang wird.

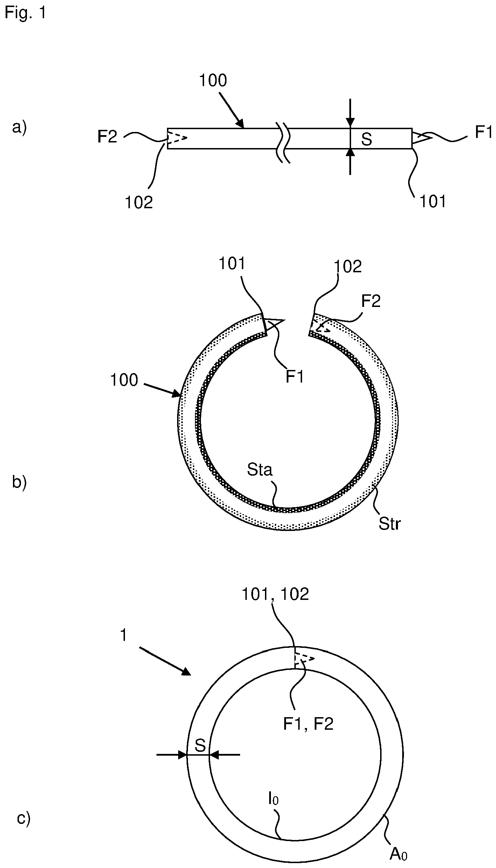

Die Abrollung eines in Pressform hergestellten O-Ringes mit Innendurchmesser 100 mm und Schnurdicke 5 mm führt dabei zu einer Streckung von 10 %, was eine Überbelastung von 4 % bedeutet. Ein erfindungsgemäßer vergleichbar aus 5 mm Rundschnur geformter Abrolldichtring hingegen erfährt bei der Abrollung mit 5 % Streckung und 5 % Stauchung nur 50 % der maximalen Streckungs- und Stauchungsspannungen eines herkömmlichen O-Rings. Da somit die 6 % nicht überschritten werden, findet keine Überbelastung des erfindungsgemäßen Abrolldichtrings 1 statt, der in **Fig. 1c** in einer beispielhaften Ausführungsform dargestellt ist.

**Fig. 1a** **bis c** verdeutlicht die Herstellung des Abrolldichtrings 1 aus einer Rundschnur 100 mit zwei Stoßenden 101, 102 und der Schnurstärke S durch Ringschluss. Eine Verbindung der Stoßenden 101, 102 der Rundschnur 100 erfolgt ohne Vulkanisierung oder Kleben durch ineinander Fügen von miteinander korrespondierenden Formschlusselementen F1, F2, die an den Stoßenden 101, 102 vorliegen. Durch die Biegung der Rundschnur 100 zum Ringschluss erfährt das Material der Rundschnur 100 außenumfänglich eine Streckung Str und innenumfänglich eine Stauchung Sta, sodass der so gefertigte Abrolldichtring 1 in seinem Ruhezustand bzw. seiner Ausgangskonfiguration am Außenumfang A₀ gestreckt und an seinem Innenumfang I₀ gestaucht vorliegt.

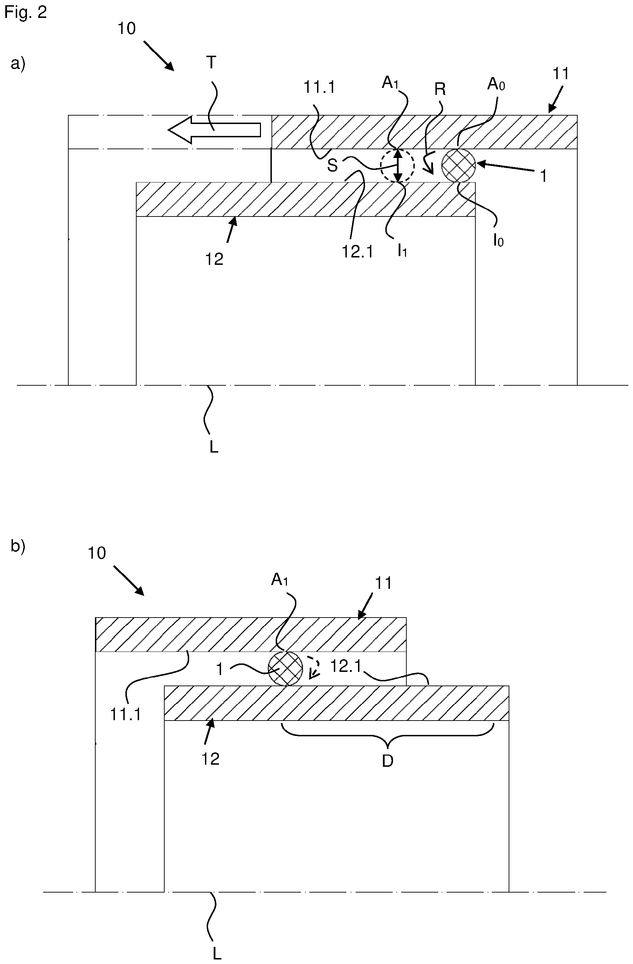

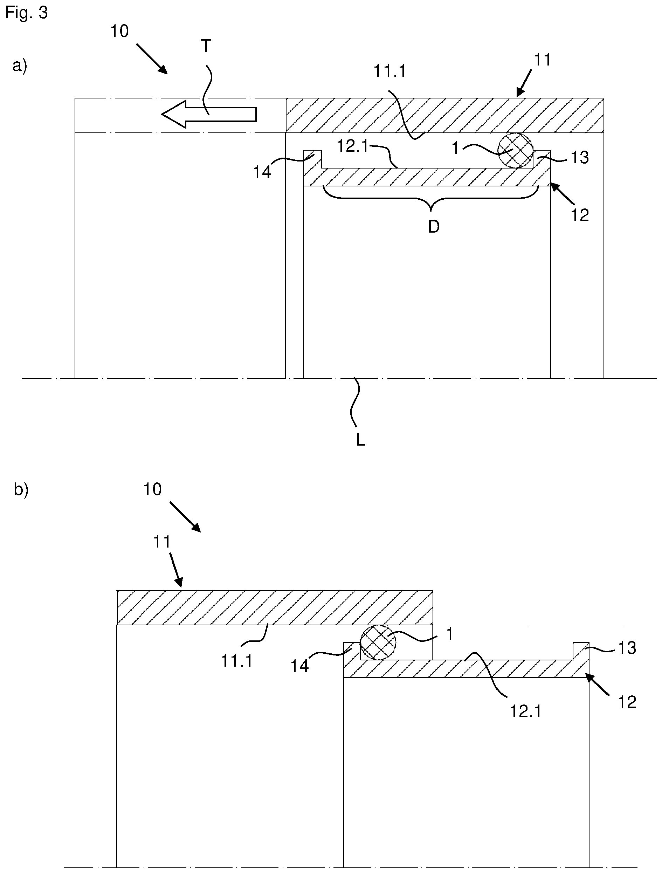

Durch das Abrollen entlang einer Dichtstrecke D (vgl. **Fig. 2****,** **3**) um eine halbe Umdrehung, d. h. 180° in Bezug auf die Schnurdicke S wird der Abrolldichtring 1 so verformt (bzw. umgestülpt), dass der ursprüngliche Außenumfang A₀ zum Innenumfang I₁ wird, wobei die am ursprünglichen Außenumfang A₀ vorliegende Streckung gestaucht und damit aufgehoben wird. Entsprechend wird der ursprüngliche Innenumfang I₀ zum Außenumfang A₁, wobei die am ursprünglichen Innenumfang I₀ vorliegende Stauchung gestreckt und damit aufgehoben wird. Beim weiteren Abrollen, wenn der Abrolldichtring 1 eine ganze Umdrehung, d. h. 360° in Bezug auf die Schnurdicke S durchgeführt hat, liegt er in der Ausgangskonfiguration vor, in der der ursprüngliche Außenumfang A₀ wieder der Außenumfang mit der Streckung ist und der ursprüngliche Innenumfang I₀ der Innenumfang mit der Stauchung.

Die ohne Stoffschluss sicher verbindbaren Formschlusselemente F1, F2 bestehen in dem in **Fig. 1** dargestellten Beispiel aus einem Kegel F1 am ersten Stoßende 101 und einer korrespondierenden Kegelhülse F2 am zweiten Stoßende 102, wobei der Kegelöffnungswinkel z. B. 60° betragen kann. Ineinander gefügt erfahren die Kegelformschlusselemente F1, F2 in der Dichtungsanordnung 10 (vgl. **Fig. 2 - 4**) durch den radialen Dichtungsdruck einen stetigen axialen Dichtungsdruck auf der Dichtungskegelfläche, der sich auch nicht mehr lösen oder verändern kann, solange der radiale Dichtungsdruck besteht

Selbstverständlich sind von dem dargestellten Beispiel abweichende Formschlusselemente denkbar, um die Stoßenden der Rundschnur sicher ohne Vulkanisieren oder Verkleben durch Formschluss zu verbinden, wobei die Formschlusselemente gegebenenfalls auch einen Hintergriff bereitstellen können, damit die Verbindung der Stoßenden 101, 102 gegen Zug gesichert ist. Beispielsweise können Formschlusselemente mit Hintergriff durch einen Kegel und Hohlkegel bzw. Kegelhülse (bzw. Kegelstumpf und Kegelstumpfhülse) gebildet werden, wobei sich der Kegel(stumpf) (ähnlich einer Schwalbenschwanzverbindung) an einem Schnurende vom Stoßende weg aufweitet und sich die Kegelhülse am anderen Schnurende zum Stoßende hin korrespondierend verjüngt. Alternativ kann ein sich vom Stoßende weg verjüngender Kegel(stumpf) durch eine Ringnut in einem vorbestimmten Abstand vom Schnurende abgesetzt sein, und am anderen Schnurende eine sich zum Stoßende hin aufweitende Kegelhülse durch einen Ringabsatz begrenzt werden, der in die Ringnut am anderen Ende eingreifen kann, um einen Hintergriff bereitzustellen. Das Ineinanderfügen solcher Formschlusselemente mit Hintergriff ist aufgrund des gummielastischen Materials ggf. unter Verwendung geeigneter Hilfsmittel möglich.

Das gummielastische Material des Abrolldichtrings 1 weist vorzugsweise eine Shore-Härte in einem Bereich von 50 bis 90 Shore auf. Nichtbeschränkende Beispiele für Materialien sind etwa Ethylen-Propylen-Dien-(Monomer)-Kautschuk oder Acrylnitril-Butadien-Kautschuk. Es kommen aber auch andere Materialien in Frage, deren Härte und Elastizität eine Verwendung als Dichtung gestatten, und die eine für das Abrollen geeignete Reibung bereitstellen.

**Fig. 2a, b** **und** **3a, b** zeigen jeweils eine dynamische Dichtanordnung 10 eines erfindungsgemäßen Abrolldichtrings 1 zur translatorischen Abdichtung eines dynamischen Dichtsystems aus zwei linear zueinander bewegten Dichtelementen 11, 12, wobei jeweils nur eine Hälfte der bezüglich der Längsachse L rotationssymmetrischen Dichtanordnung 10 gezeigt ist.

Die dynamische Dichtanordnung 10 besteht aus einem hohlzylindrischen Dichtelement 11 mit einer Innenumfangsfläche 11.1 in dem koaxial ein zylindrisches Dichtelement 12 mit einer Außenumfangsfläche 12.1 angeordnet ist. Im gezeigten Beispiel ist das zylindrische Dichtelement 12 ebenfalls ein hohlzylindrisches Dichtelement 12, wird aber der besseren Unterscheidbarkeit wegen weiterhin als zylindrisches Dichtelement 12 bezeichnet. **Fig. 3** unterscheidet sich von **Fig. 2** dadurch, dass die Dichtstrecke D beidseitig durch einen Ringanschlag 13, 14 an dem zylindrischen Dichtelement 12 begrenzt wird, der sich von der Außenumfangsfläche 12.1 radial nach außen um etwa die Hälfte der Schnurstärke S erstreckt.

In **Fig. 2a** **und** **3a** ist der Abrolldichtring 1 in seiner Ausgangskonfiguration am ersten Ende der Dichtstrecke D (in **Fig. 3a** am Ringanschlag 13) angeordnet, in der der Abrolldichtring 1 an seinem Außenumfang A₀ gestreckt und an seinem Innenumfang I₀ gestaucht vorliegt und mit dem Außenumfang A₀ die Innenumfangsfläche 11.1 des hohlzylindrischen Dichtelements 11 und mit dem Innenumfang I₀ die Außenumfangsfläche 12.1 des zylindrischen Dichtelements 12 kontaktiert. Mit der linearen Bewegung des hohlzylindrischen Dichtelements 11 in Richtung T folgt der Abrolldichtring 1 in Rollrichtung R, wobei er nach einer halben Umdrehung (angedeutet durch Strichelierung in **Fig. 2a**) in der Umkehrkonfiguration vorliegt, in der der ursprüngliche Innenumfang I₀ unter Aufhebung der Stauchung als Außenumfang A₁ des Abrolldichtrings 1 die Innenumfangsfläche 11.1 kontaktiert, und der ursprüngliche Außenumfang A₀ unter Aufhebung der Streckung als Innenumfang I₁ des Abrolldichtrings 1 die Außenumfangsfläche 12.1 kontaktiert. **Fig. 2b****,** **3b** zeigen den Abrolldichtring 1 ebenfalls in Umkehrkonfiguration (in **Fig. 3b** an dem Ringanschlag 14) nach Zurücklegen der gesamten Dichtstrecke D durch eine Hubbewegung des Dichtelements 11, wobei im gezeigten Beispiel die Dichtstrecke D eineinhalb Umdrehungen des Abrolldichtrings 1 entspricht.

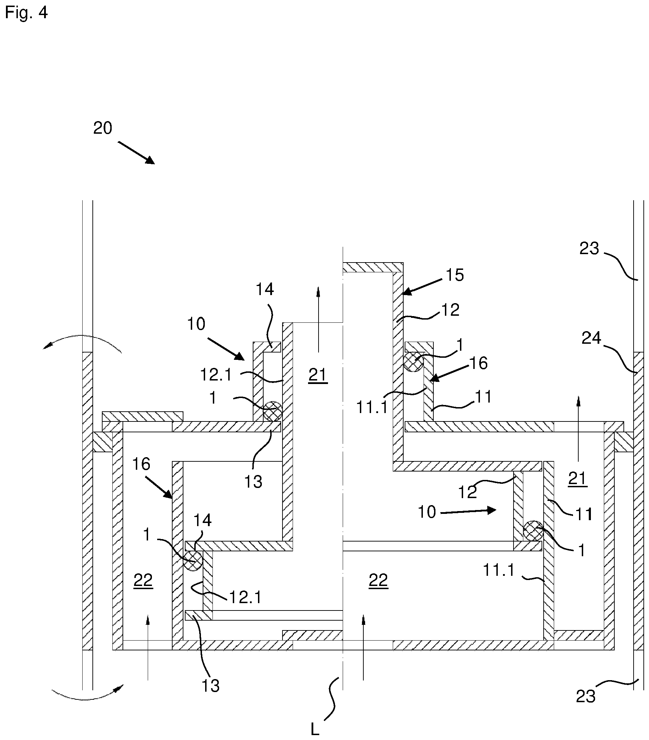

**Fig. 4** zeigt mit einem Filterbrunnen ein beispielhaftes Einsatzgebiet für den erfindungsgemäßen Abrolldichtring 1 in erfindungsgemäßen Dichtanordnungen 10 in einer erfindungsgemäßen Pumpe 20. Der Filterbrunnen funktioniert durch Kreislaufführung des Grundwassers durch Filteröffnungen 23 in der Brunnenschachtwand 24 mittels der Pumpe 20, die hier für einen Druckbereich von 1 bis 2 bar mit konstantem Pumpförderstrom ausgebildet ist. Die Darstellung in **Fig. 4** zeigt links und rechts der Rotationsachse L den Kolben 15 in den beiden Hubendstellungen. Die Pumpe 20 weist zwei Dichtanordnungen 10 zwischen dem beweglichen Kolben 15 und dem Pumpenzylinder 16 zur Erzeugung der Förderströme zwischen den jeweiligen Saugräumen 22 und Druckräumen 21 auf. Der Kolben 15 hat dabei zwei hohlzylindrische Dichtelementabschnitte 12 mit unterschiedlichen Durchmessern und den jeweiligen Außenumfangsflächen 12.1. Der Pumpenzylinder 16, in dem der Kolben 15 bewegt wird, hat korrespondierend dazu zwei hohlzylindrische Dichtelementabschnitte 11 mit unterschiedlichen Durchmessern und den jeweiligen Innenumfangsflächen 11.1. Die Dichtstrecken (der Übersichtlichkeit wegen in **Fig. 4** nicht gesondert bezeichnet) für die jeweiligen Abrolldichtringe 1 sind in jeder Dichtanordnung beidseitig durch Ringanschläge 13, 14 begrenzt. Bei der in **Fig. 4** oberen Dichtanordnung 10 mit geringerem Durchmesser sind die Ringanschläge 13, 14 an dem hohlzylindrischen Dichtelement 11 des Pumpenzylinders 16 radial nach innen weisend vorgesehen. An der in **Fig. 4** unteren Dichtanordnung 10 mit größerem Durchmesser sind die Ringanschläge 13, 14, die die Dichtstrecke begrenzen, radial nach außen weisend an dem hohlzylindrischen Dichtelement 12 des Kolbens 15 ausgebildet. Die Verwendung von erfindungsgemäßen Dichtanordnungen 10 mit den erfindungsgemäßen Abrolldichtringen 1 ermöglichen eine annähernd verschleißlose Abdichtung zwischen den bewegten Kolbendichtflächen 12.1 und den Pumpzylinderdichtflächen 11.1, sodass die Pumpe 20 als Grundwasser-Kreislaufpumpe für Druckbereiche von 1 - 2 bar in Wärmepumpen-Kreisläufen mit ca. 10 m³/h im 24-Stundenbetrieb mehrere Jahre betrieben werden kann, ohne dass die Dichtungen erneuert werden müssen. Zudem sind aufgrund der geringen Abrolldicht-Widerstände bei Kolbenhubgeschwindigkeiten unter 0,1 m/s geringere Pumpenantriebsleistungen erforderlich.

Eine Verwendung der erfindungsgemäßen Dichtanordnung mit einem erfindungsgemäßen Abrolldichtring ist allerdings nicht auf einen solchen Einsatz in einer Filterbrunnenpumpe beschränkt, sondern kann prinzipiell zur translatorischen Abdichtung jedes dynamischen Dichtsystems aus zwei linear zueinander bewegten Dichtelementen eingesetzt werden.

### BEZUGSZEICHENLISTE

- 1: Abrolldichtring
- 1.1, 1.2: erste, zweite Kontaktfläche
- 10: Dichtanordnung
- 11: Hohlzylindrisches Dichtelement
- 11.1: Innenumfangsfläche
- 12: (hohl-) zylindrisches Dichtelement
- 12.1: Außenumfangsfläche
- 13, 14: Ringanschlag
- 15: Pumpenkolben
- 16: Pumpenzylinder
- 100: Rundschnur
- 101, 102: Stoßenden

- 20: Filterbrunnenpumpe / Hubkolbenpumpe
- 21: Druckraum
- 22: Saugraum
- 23: Filter
- 24: Brunnenwand

- A₀, I₀: Außenumfang, Innenumfang Ursprungszustand
- A₁, I₁: Außenumfang, Innenumfang Umkehrkonfiguration
- D: Dichtstrecke
- F1, F2: Korrespondierende Formschlusselemente
- R: Abrollrichtung
- T: Translatorische Linearbewegungsrichtung
- S: Schnurstärke/-dicke
- Str, Sta: Streckung, Stauchung
- L: Rotationsachse / Längsachse

## Patentansprüche

1. Abrolldichtring (1) zur translatorischen Abdichtung eines dynamischen Dichtsystems aus zwei linear zueinander bewegten Dichtelementen (11, 12),
**dadurch gekennzeichnet, dass**
der Abrolldichtring (1) aus einer Rundschnur (100) mit zwei Stoßenden (101, 102) gefertigt ist, die durch Ringschluss miteinander verbunden sind, wobei ein Material des Abrolldichtrings (1) an seinem Außenumfang (A₀) gestreckt und an seinem Innenumfang (I₀) gestaucht vorliegt.

2. Abrolldichtring (1) nach Anspruch 1,
**dadurch gekennzeichnet, dass**
die Stoßenden (101, 102) korrespondierende Formschlusselemente (F1, F2) aufweisen, sodass die Stoßenden (101, 102) formschlüssig verbunden sind.

3. Abrolldichtring (1) nach Anspruch 1 oder 2,
**dadurch gekennzeichnet, dass**
das Material des Abrolldichtrings (1) ein gummielastisches Material mit einer Shore-Härte in einem Bereich von 50 bis 90 Shore ist.

4. Dynamische Dichtanordnung (10) aus zwei linear zueinander bewegten Dichtelementen (11, 12), die ein zylindrisches Dichtelement (12) mit einer Außenumfangsfläche (12.1) und ein hohlzylindrisches Dichtelement (11) mit einer Innenumfangsfläche (11.1) sind, wobei das zylindrische Dichtelement (12) in Bezug auf eine Längsachse (L) relativ beweglich in dem hohlzylindrischen Dichtelement (11) angeordnet ist, wobei eine dynamische Dichtung zwischen der Innenumfangsfläche (11.1) und der Außenumfangsfläche (12.1) angeordnet ist,
**dadurch gekennzeichnet, dass**
die dynamische Dichtung ein Abrolldichtring (1) nach zumindest einem der Ansprüche 1 bis 3 ist, wobei der Abrolldichtring (1) beim Abrollen zwischen der Innenumfangsfläche (11.1) und der Außenumfangsfläche (12.1) der zwei linear zueinander bewegten Dichtelemente (11, 12) entlang einer Dichtstrecke (D) eine Streckung (Str) und Stauchung (Sta) von bis zu 6 % aufweist.

5. Dynamische Dichtanordnung (10) nach Anspruch 4,
**dadurch gekennzeichnet, dass**
die Dichtstrecke (D) zumindest einseitig durch einen Ringanschlag (13, 14) begrenzt wird, der an dem zylindrischen Dichtelement (12) oder dem hohlzylindrischen Dichtelement (11) vorliegt und sich entsprechend von der Außenumfangsfläche (12.1) radial nach außen oder von der Innenumfangsfläche (11.1) radial nach innen erstreckt.

6. Dynamische Dichtanordnung (10) nach Anspruch 4 oder 5,
**dadurch gekennzeichnet, dass**
eine Oberfläche des Abrolldichtrings (1) und/oder die Außenumfangsfläche (12.1) und/oder die Innenumfangsfläche (11.1) eine reibungsverstärkende Beschichtung aufweisen.

7. Dynamische Dichtanordnung (10) nach zumindest einem der Ansprüche 4 bis 6,
**dadurch gekennzeichnet, dass**
das zylindrische Dichtelement (12) mit der Außenumfangsfläche (12.1) durch einen Pumpenkolben (15) und das hohlzylindrische Dichtelement (11) mit der Innenumfangsfläche (11.1) durch einen Pumpenzylinder (16) bereitgestellt werden.

8. Hubkolbenpumpe (20) mit einem linear entlang einer Längsachse (L) in einem Pumpenzylinder (16) geführten Pumpenkolben (15) und einer dynamischen Dichtung, die eine dynamische Dichtanordnung bilden, wobei der Pumpenkolben (16) ein zylindrisches Dichtelement (12) mit einer Außenumfangsfläche (12.1) und der Pumpenzylinder (16) ein hohlzylindrisches Dichtelement (11) mit einer Innenumfangsfläche (11.1) sind und die dynamische Dichtung zwischen der Innenumfangsfläche (11.1) und der Außenumfangsfläche (12.1) angeordnet ist,
**dadurch gekennzeichnet, dass**
die dynamische Dichtanordnung eine dynamische Dichtanordnung (10) nach zumindest einem der Ansprüche 4 bis 7 mit einem Abrolldichtring (1) nach zumindest einem der Ansprüche 1 bis 3 ist.

9. Verwendung eines Abrolldichtrings (1) nach zumindest einem der Ansprüche 1 bis 3 in einer dynamischen Dichtanordnung (10) nach zumindest einem der Ansprüche 4 bis 7, wobei der Abrolldichtring (1)
- in einer Ausgangskonfiguration, in der das Material des Abrolldichtrings (1) an seinem ursprünglichen Außenumfang (A₀) gestreckt und an seinem ursprünglichen Innenumfang (I₀) gestaucht vorliegt, am Innenumfang (I₀) die Außenumfangsfläche (12.1) des zylindrischen Dichtelements (12) und am Außenumfang (A₀) die Innenumfangsfläche (11.1) des hohlzylindrischen Dichtelements (11) kontaktiert, und
- beim Abrollen entlang einer Dichtstrecke (D) aus der Ausgangskonfiguration nach einer halben Umdrehung in Bezug auf eine Schnurstärke (S) des Abrolldichtrings (1) eine Umkehrkonfiguration einnimmt, in der der ursprüngliche Innenumfang (I₀) unter Aufhebung der Stauchung (Sta) als Außenumfang (A₁) des Abrolldichtrings (1) die Innenumfangsfläche (11.1) kontaktiert, und in der der ursprüngliche Außenumfang (A₀) unter Aufhebung der Streckung (Str) als Innenumfang (11) des Abrolldichtrings (1) die Außenumfangsfläche (12.1) kontaktiert.
